# FASCICULE DE BREVET EUROPEEN

(11) **EP 0 986 288 B1**
(45) Date de publication et mention de la délivrance du brevet: **14.06.2006**
(21) Numéro de dépôt: 99402199.6
(22) Date de dépôt: 07.09.1999
(51) Int. Cl.: H05B 6/06, H02M 7/538, H02M 7/5387

(54) **Dispositif d'alimentation à onduleur dont la puissance délivrée est controlée**
Wechselstromwandlervorrichtung mit gesteuerter Leistungsabgabe
Supply device with a controlled power delivering inverter

(30) Priorité: 11.09.1998 FR 9811352
(43) Date de publication de la demande: 15.03.2000
(73) Titulaire: Brandt Industries, 92500 Rueil Malmaison (FR)
(72) Inventeur: Cornec, René, 94117 Arcueil Cedex (FR); Gouardo, Didier, 94117 Arcueil Cedex (FR); Yve, Christophe, 94117 Arcueil Cedex (FR)
(74) Mandataire: Santarelli

(56) Documents cités:
- FR-A- 2 701 612

## Description

L'invention se rapporte à un dispositif d'alimentation à onduleur destiné à alimenter une charge d'impédance variable. L'invention trouve particulièrement son utilité dans le domaine du chauffage par induction en cuisson domestique. En effet, la forme et le matériau des ustensiles de cuisine susceptibles d'être chauffés par induction font évoluer de façon importante l'impédance de la charge alimentée par le générateur de puissance.

De nombreux dispositifs, comme par exemple celui décrit dans la demande de brevet EP 0 405 611 et FR2701612, asservissent la puissance délivrée par un générateur, pour qu'elle devienne uniquement fonction d'une consigne de l'utilisateur indépendamment du matériau et de la forme de l'ustensile. Pour atteindre ce but, les composants électroniques de telles réalisations doivent être surdimensionnés ; ce qui augmente le coût de réalisation de tels dispositifs. De plus, certains ustensiles de cuisine peuvent présenter des impédances particulières pouvant mettre en danger le générateur, par exemple en détruisant certains composants électroniques. Pour palier ce danger, certains générateurs, comme par exemple celui décrit dans la demande de brevet EP 0 561 207, utilisent une sécurité arrêtant le générateur si le courant, dans certains composants électroniques dépasse une valeur maximale admissible. Ce type de sécurité empêche totalement l'utilisation de certains ustensiles qui pourraient néanmoins être utilisés en limitant le courant délivré par le générateur.

Le but de l'invention est de contrôler la puissance délivrée par le générateur tout en lui permettant de délivrer le maximum de puissance sans le mettre en danger et en se rapprochant au maximum d'une consigne de puissance donnée par un utilisateur.

Pour atteindre ce but, l'invention a pour objet un dispositif d'alimentation à onduleur destiné à alimenter un circuit résonant, comportant un générateur, comportant au moins un interrupteur monté en série avec le circuit résonant et une diode de roue libre montée en parallèle de l'interrupteur, l'interrupteur étant commandé par un signal périodique de fréquence dite fréquence de travail, le dispositif étant caractérisé en ce qu'il comporte en outre :
- des premiers moyens fournissant une mesure du courant instantané circulant dans le circuit résonant,
- des seconds moyens pour déduire du courant instantané, le courant maximum,
- des troisièmes moyens pour déduire du courant instantané, le courant, dit de commutation, courant pour lequel l'interrupteur ou la diode de roue libre qui lui est associée devient conducteur,
- des premiers moyens de commande de l'interrupteur, recevant le courant maximum, le courant de commutation et une consigne donnée par l'utilisateur, modifiant la consigne donnée par l'utilisateur en fonction du courant maximum et du courant de commutation et, fournissant le signal périodique en fonction de la consigne modifiée.

L'invention sera mieux comprise et d'autres avantages apparaîtront à la lecture de différents modes de réalisation illustrés par le dessin annexé, sur lequel :
- la figure 1 représente un générateur alimentant un circuit résonnant ainsi qu'une mesure de courant conforme à l'invention ;
- la figure 2 représente l'utilisation de l'invention dans une structure de générateur dite en pont complet ;
- la figure 3 représente l'utilisation de l'invention dans une structure de générateur dite mono-interrupteur;
- la figure 4 représente l'utilisation de l'invention pour deux générateurs alimentés en parallèle entre les bornes d'une même alimentation continue ;
- la figure 5 représente une courbe montrant un exemple d'évolution du courant instantané dans le temps, courant circulant dans l'un des interrupteurs et dans la diode de roue libre associée à cet interrupteur ;
- la figure 6 représente l'utilisation du courant maximum, du courant instantané et du courant moyen pour commander le générateur.

Pour plus de clarté, dans les différentes figures, les mêmes repères topologiques représenteront les mêmes éléments.

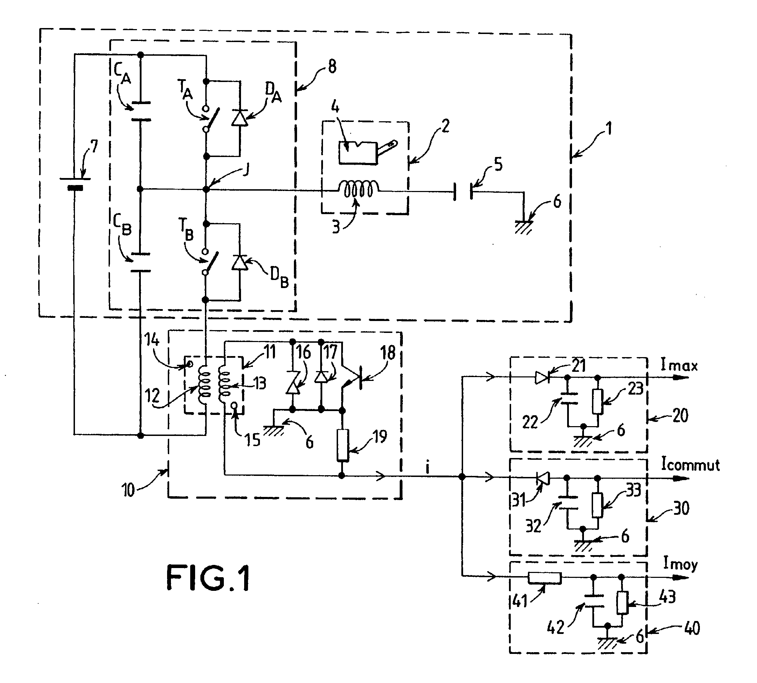

La figure 1 montre au cadre 1 une structure classique de générateur 8 de puissance à onduleur alimentant une charge 2 principalement inductive. Dans le domaine de la cuisson domestique, cette charge comporte un inducteur 3, généralement placé sous une plaque vitrocéramique, et un ustensile 4 de cuisine posé sur la plaque vitrocéramique. De nombreux paramètres peuvent faire varier l'impédance de la charge 2. Il s'agit principalement de la forme, du matériau de l'ustensile 4 et de sa position par rapport à l'inducteur 3. A moindre mesure, on note également que lorsque la température de l'inducteur 3 et de l'ustensile 4 évolue, l'impédance de la charge 2 évolue. Le but de l'invention étant un asservissement optimal de la puissance délivrée par l'inducteur 3, il est bien entendu que l'invention n'est pas limitée au domaine de la cuisson domestique et peut être employée à chaque fois que l'on cherche à délivrer une puissance donnée à une charge susceptible de varier. Une capacité 5 est connectée entre l'une des bornes de la charge 2 et une masse électrique 6. La charge 2 et la capacité 5 forment un circuit résonant. L'autre borne de la charge 2 est connectée au point de jonction J de deux interrupteurs T_{A} et T_{B}. Ces deux interrupteurs T_{A} et T_{B} sont avantageusement des interrupteurs électroniques tels que des thyristors, des transistors bipolaires, des transistors à effet de champ ou des interrupteurs du type transistor commandés en tension, connus dans la littérature anglo-saxonne sous le nom de IGBT ( Insulated Gate Bipolar Transistor : transistor bipolaire à grille isolée). Le moyen de commande de ces deux interrupteurs n'est pas représenté. Avantageusement, ce moyen commande essentiellement la fréquence à laquelle les interrupteurs T_{A} et T_{B} s'ouvrent et se ferment. Un exemple de réalisation d'un tel moyen de commande est décrit dans la demande de certificat d'addition à un brevet d'invention FR 2 578 697. La borne de l'interrupteur T_{A} non raccordée au point J est raccordée au pôle positif d'une source de tension continue 7. La borne de l'interrupteur T_{B} non raccordée au point J, est raccordée au pôle négatif de la source de tension continue 7. Avantageusement, la source de tension continue 7 est réalisée en redressant une tension secteur alternative, par exemple 230V. Le moyen de réalisation de la source de tension continue 7 n'est pas représenté figure 1. De plus, au cadre 1 on trouve deux diodes D_{A} et D_{B} appelées diodes de roue libre. La cathode de la diode D_{A} est raccordée au pôle positif de la source de tension continue 7. L'anode de la diode D_{A} et la cathode de la diode D_{B} sont raccordées au point de jonction J des deux interrupteurs T_{A} et T_{B}. L'anode de la diode D_{B} est raccordée au pôle négatif de la source de tension continue 7. En outre, le cadre 1 comporte avantageusement deux capacités C_{A} et C_{B} d'aide à la commutation des interrupteurs T_{A} et T_{B}. La capacité C_{A} est raccordée entre le pôle positif de la source de tension continue 7 et le point de jonction J. La capacité C_{B} est raccordée entre le point de jonction J et le pôle négatif de la source de tension continue 7. Les deux interrupteurs T_{A} et T_{B}, les deux diodes de roue libre D_{A} et D_{B} ainsi que les deux capacités d'aide à la commutation C_{A} et C_{B} forment un générateur de puissance à onduleur 8.

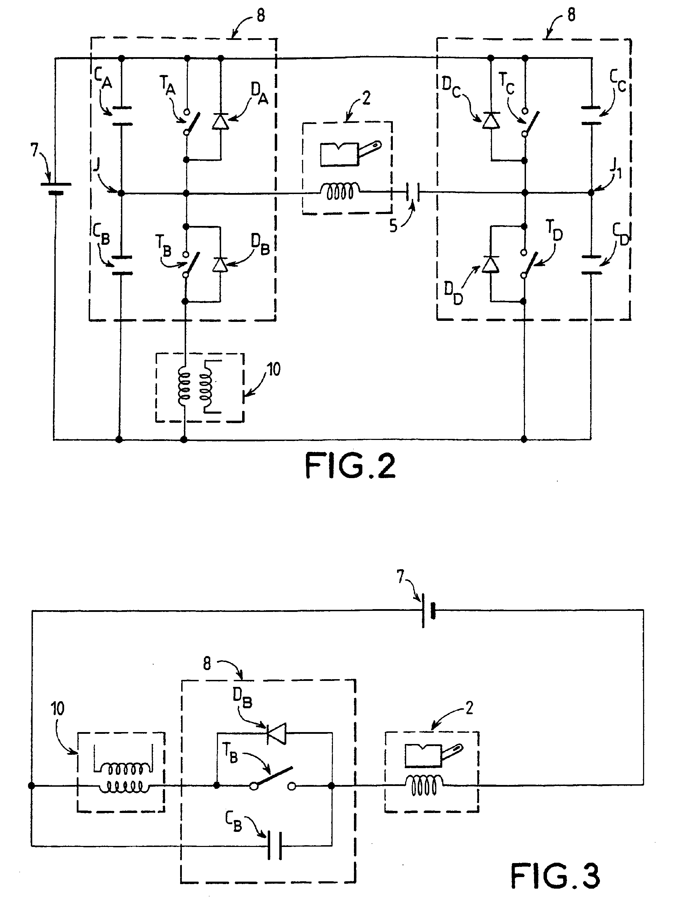

La structure du générateur 8 représentée au cadre 1 est une structure dite en demi-pont. Il est bien entendu que l'invention peut être mise en oeuvre pour d'autres structures de générateur comme par exemple une structure en pont complet représentée figure 2. En complément de la structure en demi-pont représentée figure 1, cette structure comporte deux interrupteurs supplémentaires T_{C} et T_{D} ayant un point de jonction J₁ connecté à la capacité 5 à la place de la masse électrique 6 représentée figure 1. Ces deux interrupteurs supplémentaires T_{C} et T_{D} sont, comme les interrupteurs T_{A} et T_{B} reliés à la source de tension continue 7. Comme pour le montage représenté figure 1, une diode, respectivement D_{C}, D_{D}, et une capacité, respectivement C_{C}, C_{D}, sont raccordées en parallèle de chaque interrupteur T_{C}, T_{D}. L'ensemble de ces diodes D_{A}, D_{B}, D_{C}, D_{D}, capacités C_{A}, C_{B}, C_{C}, C_{D} et interrupteurs T_{A}, T_{B}, T_{C}, T_{D} forme un générateur fonctionnant de façon équivalente au générateur 8 représenté figure 1. Pour plus de commodité, le générateur représenté figure 2 porte également le repère 8. Le circuit résonant, comportant la charge 2 et la capacité 5, est raccordé entre les points de jonction J et J₁.

L'invention peut tout aussi bien être mise en oeuvre dans une structure ne comportant qu'un seul interrupteur, dite structure mono-interrupteur. Une telle structure est représentée figure 3. Dans cette figure, le générateur 8 ne comporte qu'un seul interrupteur T_{B} en parallèle auquel sont raccordés une diode de roue libre D_{B} et une capacité d'aide à la commutation et de résonance C_{B}. Du côté de la cathode de la diode D_{B}, l'interrupteur T_{B}, la capacité CB et la diode D_{B} sont raccordés au pôle positif de la source de tension continue 7. Du côté de l'anode de la diode D_{B}, l'interrupteur T_{B}, la capacité C_{B} et la diode D_{B} sont tous trois raccordés à la borne négative de la source de tension continue 7 par l'intermédiaire du circuit résonant ne comportant, dans la structure mono-interrupteur, que la charge 2. La fonction de capacité de résonance est assurée par la capacité C_{B}.

Conformément à l'invention, le dispositif comporte des moyens 10 pour mesurer le courant instantané circulant dans le circuit résonant 2, 5. Avantageusement, ces moyens, représentés au cadre 10 dans les figures 1, 2 et 3, mesurent le courant instantané circulant dans l'interrupteur T_{B} et dans la diode de roue libre D_{B}. Pour les modes de réalisations représentés figures 1 et 2, les moyens 10 sont raccordés entre d'une part, le point commun de l'interrupteur T_{B} et de l'anode de la diode D_{B} et d'autre part, le pôle négatif de l'alimentation continue 7. Pour le mode de réalisation représenté figure 3, les moyens 10 sont raccordés entre, d'une part le point commun de l'interrupteur T_{B} et la cathode de la diode de roue libre D_{B} et, d'autre part le pôle positif de la source de tension continue 7. La capacité C_{B} est, quant à elle, directement raccordée au pôle positif de la source de tension continue 7, sans passer par l'intermédiaire des moyens 10. Dans la pratique, l'interrupteur T_{B} et la diode de roue libre D_{B} ne conduisent pas simultanément. Dans la suite de la description, on ne distinguera pas le courant circulant dans l'interrupteur T_{B} et dans la diode D_{B}. En effet, cette distinction ne présente pas d'intérêt pour l'invention.

Pour les structures de générateur comportant plusieurs interrupteurs, on peut bien sûr envisager de remplacer la mesure de courant dans l'interrupteur T_{B} et la diode D_{B} par une mesure de courant dans un autre interrupteur et sa diode de roue libre associée. Dans une structure en pont complet on se contentera de mesurer le courant dans l'un des quatre interrupteurs et dans sa diode de roue libre associée.

Un avantage lié à l'invention est que les moyens 10 de mesure de courant peuvent être uniques quelle que soit la structure du générateur 8. En effet, lorsque le générateur comporte plusieurs interrupteurs, ils fonctionnent de façon sensiblement identique, avec un décalage dans le temps de l'un par rapport à ou aux autres. En conséquence, la connaissance du courant circulant dans un seul des interrupteurs et dans la diode de roue libre qui lui est associée suffit pour connaître le courant circulant dans le ou les autres interrupteurs et leur diode de roue libre associée.

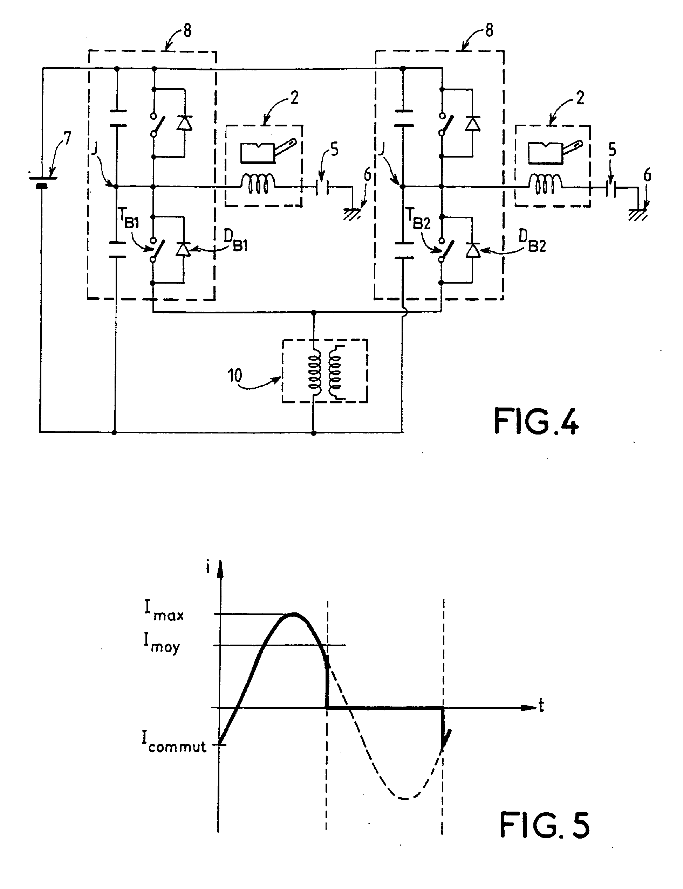

Il est même possible d'envisager de n'utiliser que des moyens 10 uniques de mesure de courant pour plusieurs générateurs 8 alimentés en parallèle entre les bornes d'une même alimentation continue 7, à condition que ces différents générateurs 8 ne fonctionnent pas simultanément mais de façon alternative. Le fonctionnement alternatif est souvent envisagé pour éviter les couplages magnétiques entre des inducteurs voisins. La figure 4 illustre un montage ou deux générateurs 8 sont connectés en parallèle entre les bornes d'une même alimentation continue 7. Chacun des générateurs 8 alimente un circuit résonant, comportant une charge 2 et une capacité 5. Chaque circuit résonant est raccordé entre le point de jonction J de chaque générateur 8 et la masse électrique 6. Des moyens 10 uniques sont prévus pour mesurer le courant instantané circulant soit dans l'interrupteur T_{B1} et dans la diode de roue libre D_{B1} du premier générateur 8 soit dans l'interrupteur T_{B2} et dans la diode de roue libre D_{B2} du deuxième générateur 8. Les moyens 10 sont, dans la figure 4, raccordés entre d'une part, le point commun des interrupteurs T_{B1} et T_{B2} et des diodes D_{B1} et D_{B2} et, d'autre part, le pôle négatif de l'alimentation continue 7. Il est bien entendu que l'invention n'est pas limitée à deux générateurs 8.

Un exemple de réalisation des moyens 10 est décrit plus en détail à l'aide de la figure 1. Il comporte avantageusement un transformateur de courant 11 dont l'enroulement primaire 12 est raccordé entre la borne de l'interrupteur T_{B} non raccordé au point de jonction J et le pôle négatif de la source de tension continue 7. A la figure 1, la capacité C_{B} est raccordée directement au pôle négatif de la source de tension continue 7. Il est également possible de raccorder la capacité C_{B} à la source de tension continue 7 par l'intermédiaire de l'enroulement primaire 12. En effet, même si le courant mesuré par le transformateur de courant 11 mesure, en plus du courant dans l'interrupteur T_{B} et la diode D_{B}, le courant dans la capacité C_{B}, cela ne présente pas de difficultés pour la mise en oeuvre de l'invention, car le courant moyen dans la capacité C_{B} est nul et que dans le fonctionnement du générateur, les capacités C_{A} et C_{B} ne conduisent qu'une faible proportion du temps. Cette variante de raccordement de la capacité C_{B} peut, bien entendue, être mise en oeuvre quelle que soit la structure du générateur 8.

Le transformateur de courant 11 comporte un enroulement secondaire 13. Une première extrémité de l'enroulement 13, est raccordé à la cathode d'une diode Zener 16, à la cathode d'une diode 17 et au collecteur d'un transistor bipolaire NPN 18. Les anodes de la diode Zener 16 et de la diode 17 et l'émetteur du transistor 18 sont raccordés à la masse électrique 6. Une résistance 19 est raccordée entre la masse électrique 6 et la seconde extrémité de l'enroulement 13. La sortie des moyens 10 est située à la borne de la résistance 19 reliée à l'enroulement 13. Un signal représentatif du courant instantané i est présent sur la sortie des moyens 10. La commande du transistor 18 par sa base n'est pas représentée sur la figure 1. Elle est réalisée de telle sorte que le transistor 18 est passant lorsque l'interrupteur T_{B} ou la diode de roue libre conduit. La polarisation du transformateur de courant 11 est réalisée de telle sorte que lorsqu'un courant circule de l'interrupteur T_{B} vers le pôle négatif de la source de tension continue 7, à travers l'enroulement primaire 12 du transformateur de courant 11, un autre courant est alors généré dans l'enroulement secondaire 13 du transformateur 11 dans la liaison entre l'enroulement 13 et la résistance 19 vers la résistance 19. La polarisation des enroulements 12 et 13 est représentée par des points 14 et 15 placés au voisinage d'une des extrémités de chaque enroulement 12 et 13.

Lorsqu'un courant circule dans la diode D_{B}, le transistor 18 conduit et une tension négative apparaît aux bornes de la résistance 19. Lorsqu'un courant circule dans l'interrupteur T_{B} vers le pôle négatif de la source de tension continue 7, à travers l'enroulement 12, un courant circule dans la diode 17 et une tension positive apparaît aux bornes de la résistance 19. Lorsque l'interrupteur T_{B} s'ouvre, aucun courant ne circule dans l'enroulement primaire 12 mais l'enroulement secondaire 13 tend à se démagnétiser. Comme le transistor 18 n'est pas passant, une tension inverse se crée aux bornes de la diode Zener 16, la faisant conduire de sa cathode vers son anode. La démagnétisation de l'enroulement secondaire 13 est principalement absorbée par l'augmentation de tension aux bornes de la diode Zener 16 en ne générant qu'un courant faible dans cette diode et par voie de conséquence qu'une faible tension aux bornes de la résistance 19. La tension mesurée aux bornes de la résistance 19 peut en conséquence être assimilée à une mesure du courant instantané i traversant l'interrupteur T_{B} et la diode D_{B}. Cette tension forme le signal représentatif du courant instantané i.

Un autre exemple de réalisation des moyens 10 consiste à raccorder, à la place de l'enroulement primaire 12, une résistance de faible valeur dite shunt aux bornes de laquelle, on mesure une tension. Cette tension représente un signal représentatif du courant instantané i. Cet exemple de réalisation présente l'inconvénient d'entraîner des pertes par effet de Joule supérieures aux pertes qu'entraîne l'exemple de réalisation représenté figure 1.

Le cadre 20 représente un exemple de moyens pour déduire du courant instantané i, le courant maximum Iₘₐₓ circulant dans l'interrupteur T_{B} et la diode D_{B}. Les moyens 20 comportent une diode 21, une capacité 22 et une résistance 23. L'anode de la diode 21 est reliée à la sortie des moyens 10. La cathode de la diode 21 est reliée à la première borne de la capacité 22 et à la première borne de la résistance 23. La seconde borne de la capacité 22 et la seconde borne de la résistance 23 sont toutes deux reliées à la masse électrique 6. Le signal disponible en sortie des moyens 10 et représentatif du courant instantané i circulant dans l'interrupteur T_{B} et la diode D_{B}, traverse la diode 21 lorsque celle-ci conduit et charge positivement la capacité 22. A la cathode de la diode 21, on dispose ainsi d'un signal représentatif du courant maximum Iₘₐₓ circulant dans l'interrupteur T_{B} et dans la diode D_{B}. La résistance 23 a pour fonction de décharger la capacité 22 pour permettre une nouvelle mesure du courant maximum Iₘₐₓ. La valeur de la résistance 23 est choisie pour présenter avec la capacité 22 une constante de temps compatible avec la nécessité de mesures répétées du courant maximum Iₘₐₓ à chaque période de fermeture de l'interrupteur T_{B}.

Le cadre 30 représente un exemple de moyens pour déduire du courant instantané i, le courant, dit de commutation, courant pour lequel l'interrupteur T_{B} ou la diode de roue libre D_{B} qui lui est associée devient conducteur I_{commut}. Les moyens 30 comportent une diode 31, une capacité 32 et une résistance 33. La cathode de la diode 31 est reliée à la sortie des moyens 10. L'anode de la diode 31 est reliée à la première borne de la capacité 32 et à la première borne de la résistance 33. La seconde borne de la capacité 32 et de la résistance 33 sont toutes deux reliées à la masse électrique 6. Le signal, disponible en sortie des moyens 10 et représentatif du courant instantané i circulant dans l'interrupteur T_{B} et la diode D_{B}, traverse la diode 31, lorsque celle-ci conduit et charge négativement la capacité 32. A l'anode de la diode 31, on dispose ainsi d'un signal représentatif du courant de commutation I_{commut}. La résistance 33 a pour fonction de décharger la capacité 32 pour permettre une nouvelle mesure du courant de commutation I_{commut}. La valeur de la résistance 33 est choisie pour présenter avec la capacité 32 une constante de temps compatible avec la nécessité de mesures répétées du courant de commutation I_{commut} à chaque période de fermeture de l'interrupteur T_{B}.

Le cadre 40 représente un exemple de moyens pour déduire du courant instantané i, le courant moyen I_{moy} circulant dans l'interrupteur T_{B} et la diode D_{B}. Les moyens 40 comportent un intégrateur que l'on peut réaliser au moyen d'une première résistance 41, d'une capacité 42 et d'une seconde résistance 43. La première borne de la résistance 41 est reliée à la sortie du moyen 10. La seconde borne de la résistance 41 est reliée à la première borne de la capacité 42 et à la première borne de la résistance 43. La seconde borne de la capacité 42 et la seconde borne de la résistance 43 sont toutes deux reliées à la masse électrique 6. Le signal disponible en sortie des moyens 10 et représentatif du courant instantané i circulant dans l'interrupteur T_{B} et la diode D_{B} traverse la résistance 41 et charge la capacité 42. Les valeurs de la résistance 41 et de la capacité 42 sont choisies pour présenter une constante de temps suffisante pour intégrer le signal disponible en sortie des moyens 10 pendant le temps où l'interrupteur T_{B} ou la diode de roue libre conduit. A la seconde borne de la résistance 41, on dispose ainsi d'un signal représentatif du courant moyen I_{moy} circulant dans l'interrupteur T_{B} et la diode D_{B}. La valeur de la résistance 43 est choisie pour présenter avec la capacité 42 une autre constante de temps permettant à la capacité 42 de se décharger suffisamment pour permettre une mesure du courant moyen I_{moy} à chaque période de fermeture de l'interrupteur T_{B}.

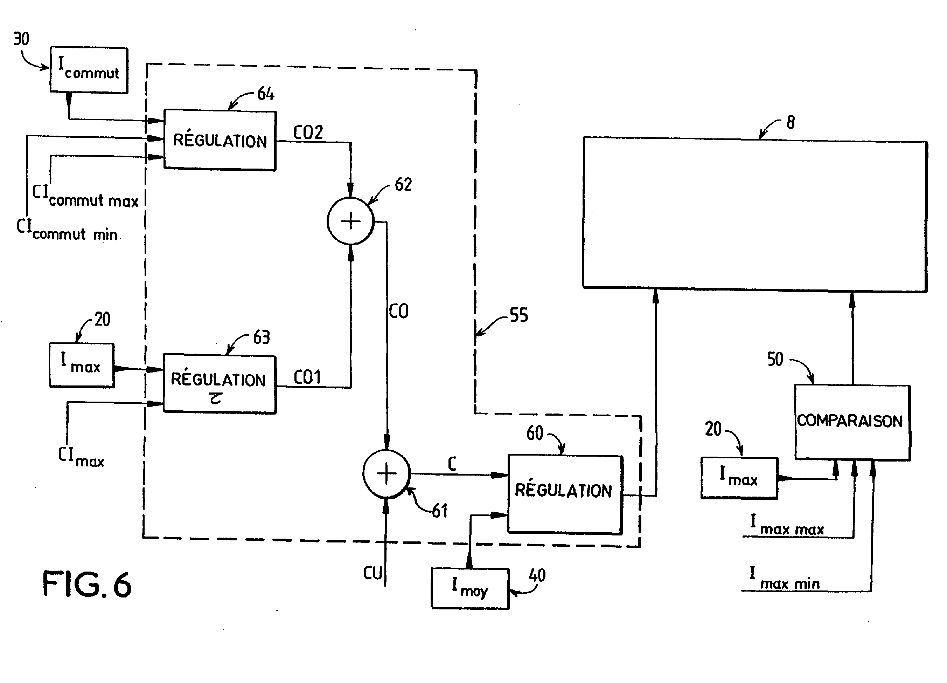

La figure 5 représente une courbe dans un repère cartésien. Le courant instantané i, circulant dans l'interrupteur T_{B} et dans la diode D_{B} d'une structure de générateur en demi-pont, est représenté en ordonnée. Le temps est représenté en abscisse. La courbe est représentée pour une période de temps dont l'inverse est la fréquence à laquelle les interrupteurs T_{A} et T_{B} s'ouvrent et se ferment. L'interrupteur T_{B} et la diode D_{B} ne conduisent le courant que durant la première moitié de la période et le courant instantané i y est représenté en trait fort. Pendant la deuxième moitié de la période, le courant instantané i est nul et la courbe en trait fort est portée par l'axe des temps. Pendant la deuxième moitié de la période, on a également représenté une courbe en trait pointillé représentant le courant circulant dans l'interrupteur T_{A} et dans la diode D_{A} que les moyens 10 ne mesurent pas. Le point de départ de la courbe en trait fort se trouve sur l'axe des ordonnées à une valeur négative I_{commut} du courant instantané i. Cette valeur est mesurée par les moyens 30. Puis, lorsque le temps passe, la courbe en trait fort croît jusqu'à une valeur Iₘₐₓ du courant i. Cette valeur Iₘₐₓ est mesurée par les moyens 20. La courbe en trait fort se poursuit en décroissant jusqu'à une valeur voisine de - I_{commut} au moment où l'interrupteur T_{B} et la diode D_{B} s'arrêtent de conduire à la fin de la première demi-période de temps pour laisser l'interrupteur T_{A} et la diode D_{A} conduire à leur tour. Sur la figure 5, on a également représentée la valeur I_{moy} du courant i. I_{moy} est la valeur moyenne du courant i durant la première demi-période. La valeur I_{moy} est mesurée par les moyens 40.

On utilise la figure 6 pour décrire un exemple de moyens pour commander le générateur 8 de la figure 1. Pour assurer la sécurité des composants du générateur 8 un module de comparaison 50 comporte une sortie générant un signal permettant d'arrêter rapidement le fonctionnement du générateur 8, par exemple en ouvrant simultanément les deux interrupteurs T_{A} et T_{B}. Le module de comparaison 50 comporte trois entrées. Le courant maximum Iₘₐₓ est présent sur la première entrée du module de comparaison 50. Deux consignes I_{max max} et I_{max min} sont présentes chacune sur les deux autres entrées du module de comparaison 50. Le module de comparaison 50 compare le courant maximum Iₘₐₓ aux deux consignes I_{max max} et I_{max min} et tant que la valeur du courant maximum Iₘₐₓ est comprise entre les valeurs des deux consignes I_{max max} et I_{max min}, le signal généré sur la sortie du module de comparaison 50 autorise le fonctionnement du générateur 8. Par contre, si la valeur du courant maximum Iₘₐₓ devient inférieure à la valeur de la consigne I_{max min} ou supérieure à la valeur de la consigne I_{max max} alors, le signal généré à la sortie du module de comparaison 50 arrête rapidement le fonctionnement du générateur 8.

La valeur de la consigne I_{max max} est déterminée pour que le courant dans l'interrupteur T_{B} et la diode D_{B} reste inférieur à une valeur qui pourrait endommager l'interrupteur T_{B} ou la diode D_{B}. Il est bien entendu, comme on l'a vu à l'aide de la figure 5, que le fonctionnement des interrupteurs T_{A} et T_{B} est sensiblement semblable. Il en est de même pour les diodes D_{A} et D_{B}. En conséquence, la limitation assurée par le module de comparaison 50 protège à la fois les interrupteurs T_{A} et T_{B} ainsi que les diodes D_{A} et D_{B}. Il en serait de même pour une structure en pont complet pour laquelle l'ensemble des interrupteurs et des diodes serait protégé.

La valeur de la consigne I_{max min} est déterminée pour qu'une puissance minimale soit transmise par l'inducteur 3 à l'ustensile 4. En effet, on a constaté que certains ustensiles ayant de mauvaises qualités magnétiques absorbent mal la puissance délivrée par l'inducteur. Cela se traduit par un courant maximum Iₘₐₓ faible. Ainsi, pour une consigne utilisateur donnée, la puissance absorbée par un ustensile 4 ayant de mauvaises qualités magnétiques sera plus faible que pour un ustensile 4 ayant de meilleures qualités magnétiques. En conséquence, lorsqu'une puissance trop faible est absorbée par l'ustensile, il est nécessaire d'arrêter le générateur 8.

La charge 2 et la capacité 5 représentées figure 1 forment un circuit résonant possédant une fréquence de résonance. Pour moduler la puissance absorbée par la charge 2, on agit avantageusement sur la fréquence d'un signal périodique qui commande l'ouverture et la fermeture des interrupteurs T_{A} et T_{B}. Cette fréquence est appelée fréquence de travail. On choisit par exemple que la fréquence de travail soit toujours supérieure à la fréquence de résonance du circuit résonant. Ainsi, la puissance absorbée dans la charge est maximale lorsque la fréquence de travail est proche de la fréquence de résonance et pour réduire la puissance absorbée, on augmente la fréquence de travail. Une telle stratégie de commande est par exemple décrite dans la demande de brevet français 96 01059 déposée au nom de la Demanderesse. On peut bien entendu envisager une fréquence de travail inférieure à la fréquence de résonance, mais pour simplifier la suite de la description, on supposera que la fréquence de travail reste supérieure à la fréquence de résonance.

Conformément à l'invention, le dispositif comporte des moyens de commande représentés au cadre 55. Ces moyens 55 commandent les interrupteurs T_{A} et T_{B} en recevant le courant maximum Iₘₐₓ, le courant de commutation I_{commut} et une consigne donnée par l'utilisateur CU. Les moyens de commande 55 modifient la consigne donnée par l'utilisateur CU en fonction du courant maximum Iₘₐₓ et du courant de commutation I_{commut} et, fournissent le signal périodique en fonction de la consigne modifiée C. Le signal périodique commande les interrupteurs T_{A} et T_{B} du générateur 8 à la fréquence de travail. Les moyens de commande 55 comportent trois modules de régulation 60, 63 et 64 ainsi que deux additionneurs 61 et 62. Le signal périodique est fourni par le module de régulation 60 qui comporte deux entrées. Le courant moyen I_{moy} est présent sur sa première entrée. Une consigne C est présente sur sa deuxième entrée. Le module de régulation 60 élabore le signal périodique de telle sorte que le courant moyen I_{moy} soit sensiblement égal à la consigne C. Un exemple d'élaboration du signal périodique est décrit dans la demande de brevet français 96 01059 déposée au nom de la Demanderesse. Dans le cas où la fréquence de travail est choisie supérieure à la fréquence de résonance et lorsque le courant moyen l_{moy}, est supérieur à la consigne C, le module de régulation 60 augmente la fréquence de travail jusqu'à ce que le courant moyen I_{moy} devienne sensiblement égal à la consigne C. A l'inverse, lorsque le courant moyen l_{moy} est inférieur à la consigne C, le module de régulation 60 diminue la fréquence de travail jusqu'à ce que le courant moyen I_{moy} devienne sensiblement égal à la consigne C. Le module de régulation 60 asservit le courant moyen l_{moy}. Ce qui revient à asservir la puissance délivrée par le générateur 8. En effet, on peut calculer la puissance en multipliant la valeur du courant moyen I_{moy} par la valeur de la tension de la source de tension continue 7.

La consigne C est un signal élaboré en modifiant une consigne donnée par l'utilisateur CU au moyen de l'additionneur 61 comportant deux entrées. La première entrée de l'additionneur 61 est reliée à un moyen d'entrée de données non représenté sur la figure 4 et permettant à l'utilisateur d'indiquer sa consigne CU au dispositif. Le moyen d'entrée de donnée comporte par exemple un clavier.

La deuxième entrée de l'additionneur 61 est reliée au second additionneur 62 délivrant un signal de correction CO. L'additionneur 62 additionne les signaux présents sur ses deux entrées.

Un signal CO1, présent sur la première entrée de l'additionneur 62, est délivré par le module de régulation 63 comportant deux entrées. Le courant maximum Iₘₐₓ est présent sur la première entrée du module de régulation 63. Une consigne CIₘₐₓ est délivrée à la deuxième entrée du module de régulation 63. Le module de régulation 63 compare le courant maximum Iₘₐₓ à la consigne CIₘₐₓ et tant que la valeur du courant maximum Iₘₐₓ est inférieure à la valeur de la consigne CIₘₐₓ, aucune correction CO1 n'est appliquée à la consigne utilisateur CU au travers des additionneurs 62 et 61. Par contre si la valeur du courant maximum Iₘₐₓ devient supérieure à la valeur de la consigne Clₘₐₓ, le module de régulation 63 génère un signal CO1 négatif qui au travers des additionneurs 62 et 61 tend à réduire la valeur de la consigne C avec une certaine constante de temps τ. Le module de régulation 63 peut par exemple comporter une régulation de type P.I.D. (Proportionnel, Intégral, Dérivé) dont on adaptera les paramètres P, I et D pour définir la constante de temps τ.

La valeur de la consigne CIₘₐₓ est déterminée pour que le courant dans l'interrupteur T_{B} et la diode D_{B} reste inférieur à une valeur de courant qui pourrait endommager l'interrupteur T_{B} ou la diode D_{B}. Cette valeur de la consigne Clₘₐₓ est choisie légèrement inférieure à la valeur de la consigne I_{max max} qui permet l'arrêt rapide du générateur 8. La valeur de la consigne Clₘₐₓ est sensiblement la valeur maximale de courant qu'un interrupteur et sa diode de roue libre associée peuvent supporter en régime permanent. Si la valeur de Iₘₐₓ dépasse la valeur de la consigne CIₘₐₓ le module de régulation 63 tend à abaisser la valeur Iₘₐₓ avec la constante de temps τ. Si néanmoins la valeur de Iₘₐₓ augmente trop rapidement, au point d'atteindre la valeur de la consigne I_{max max}, c'est alors le module de comparaison 50 qui arrête le générateur 8. On peut préciser maintenant que la valeur de la consigne I_{max max} est déterminée par le courant qu'un interrupteur et sa diode de roue libre associée peuvent accepter sans détérioration pendant le temps τ.

Un signal CO2 présent sur la deuxième entrée de l'additionneur 62 est délivré par le module de régulation 64 comportant trois entrées. Le courant de commutation I_{commut} est présent sur la première entrée du module de régulation 64. Une consigne Cl_{commut max} est délivrée à la deuxième entrée du module de régulation 64. Une autre consigne Cl_{commut min} est délivrée à la troisième entrée du module de régulation 64. Le courant de commutation I_{commut} est négatif dans un fonctionnement normal du générateur 8, comme représenté à la figure 5. Néanmoins, par la suite, on considérera les valeurs absolues du courant de commutation I_{commut} et des consignes CI_{commut min} et CI_{commut max}. Le module de régulation 64 compare le courant de commutation I_{commut} aux consignes CI_{commut max} et CI_{commut min} et tant que la valeur du courant de commutation I_{commut} reste comprise entre les valeurs des consignes Clcommut min et CI_{commut max} aucune correction C02 n'est appliquée à la consigne donnée par l'utilisateur CU au travers des additionneurs 62 et 61. Par contre, si la valeur du courant de commutation I_{commut} devient supérieure à la valeur de la consigne Cl_{commut max}, le module de régulation 64 génère un signal CO2 négatif qui, au travers des additionneurs 62 et 61, tend à réduire la valeur de la consigne C. De plus, si la valeur du courant de commutation I_{commut} devient inférieure à la valeur de la consigne Cl_{commut min}, le module de régulation 64 génère un signal CO2 positif qui, au travers des additionneurs 62 et 61, tend à augmenter la valeur de la consigne C.

La valeur de la consigne Cl_{commut max} est supérieure à la valeur de la consigne Cl_{commut min} La valeur de la consigne Cl_{commut max} est déterminée pour qu'un interrupteur et sa diode de roue libre associée ne soient pas endommagés par un courant de commutation trop fort qui entraînerait leur échauffement. La valeur de la consigne Cl_{commut min} est déterminée pour que les capacités d'aide à la commutation C_{A} et C_{B} puissent se charger suffisamment. En effet si ces capacités C_{A} et C_{B} ne se chargent pas suffisamment, les interrupteurs T_{A} et T_{B} ne se ferment pas. Ce problème est expliqué plus en détail dans la demande de brevet français 96 01059 déposé au nom de la Demanderesse.

## Revendications

1. Dispositif d'alimentation à onduleur destiné à alimenter un circuit résonant (2, 5), comportant un générateur (8), comportant au moins un interrupteur (T_{A}, T_{B} ; T_{A}, T_{B}, T_{C}, T_{D}; T_{B}) monté en série avec le circuit résonant (2, 5) et une diode de roue libre (D_{A}, D_{B}; D_{A}, D_{B}, D_{C}, D_{D} ; D_{B}) montée en parallèle de l'interrupteur (T_{A}, T_{B};T_{A}, T_{B}, T_{C}, T_{D}; T_{B}), l'interrupteur (T_{A}, T_{B} ; T_{A}, T_{B}, T_{C}, T_{D}; T_{B}) étant commandé par un signal périodique de fréquence dite fréquence de travail, le dispositif étant **caractérisé en ce qu'**il comporte en outre :
- des premiers moyens (10) fournissant une mesure du courant instantané (i) circulant dans le circuit résonant (2, 5),
- des seconds moyens (20) pour déduire du courant instantané (i), le courant maximum (Iₘₐₓ),
- des troisièmes moyens (30) pour déduire du courant instantané (i), le courant, dit de commutation, courant pour lequel l'interrupteur (T_{B}) ou la diode de roue libre (D_{B}) qui lui est associée deviennent conducteurs (I_{commut}),
- des premiers moyens de commande (55) de l'interrupteur (T_{A}, T_{B} ; T_{A}, T_{B}, T_{C}, T_{D}; T_{B}), recevant le courant maximum (Iₘₐₙ), le courant de commutation (I_{commut}) et une consigne donnée par l'utilisateur (CU), modifiant la consigne donnée par l'utilisateur (CU) en fonction du courant maximum (Iₘₐₓ) et du courant de commutation (I_{commut}) et, fournissant le signal périodique en fonction de la consigne modifiée (C).

2. Dispositif selon la revendication 1, **caractérisé en ce que** le courant instantané (i) est mesuré dans l'interrupteur (T_{B}) et dans la diode de roue libre (D_{B}) associée à cet interrupteur (T_{B}).

3. Dispositif selon l'une des revendications précédentes, **caractérisé en ce qu'**il comporte en outre des quatrièmes moyens (40) pour déduire du courant instantané (i), le courant moyen (l_{moy}) et **en ce que** les premiers moyens de commande (55) comportent un module de régulation (60) recevant le courant moyen (l_{moy}) et la consigne modifiée (C), et fournissant le signal périodique.

4. Dispositif selon l'une des revendications précédentes, **caractérisé en ce qu'**il comporte en outre des seconds moyens de commande (50) de l'interrupteur (T_{A}, T_{B}, T_{A}, T_{B}, T_{C}, T_{D}; T_{B}), arrêtant rapidement le fonctionnement du générateur (8) lorsque le courant maximum (Iₘₐₓ) n'est pas compris entre deux premières consignes (I_{max max}, I_{max min}) relatives au courant maximum (Iₘₐₓ)

5. Dispositif selon la revendication 4, **caractérisé en ce que** la plus haute (I_{max max}) des deux premières consignes (I_{max max}, I_{max min}) est déterminée pour que le courant instantané (i) reste inférieur à une valeur qui pourrait endommager l'interrupteur (T_{A}, T_{B}; T_{A}, T_{B}, T_{C}, T_{D}; T_{B}) ou la diode de roue libre (D_{A}, D_{B}; D_{A}, D_{B}, D_{C}, D_{D} D_{B}).

6. Dispositif selon l'une quelconque des revendications 4 ou 5, **caractérisé en ce que** la plus basse (I_{max min}) des deux premières consignes (I_{max max}, I_{max min}) est déterminée pour qu'une puissance minimale soit transmise par le générateur (8) au circuit résonant (2, 5).

7. Dispositif selon l'une quelconque des revendications 3 à 6, **caractérisé en ce que** le module de régulation (60) commande la fréquence de travail.

8. Dispositif selon l'une des revendications précédentes, **caractérisé en ce que** la consigne modifiée (C) est obtenue en réduisant la consigne donnée par l'utilisateur (CU) lorsque la valeur du courant maximum (Iₘₐₓ) dépasse une troisième valeur de consigne (Clₘₐₓ) relative au courant maximum (Iₘₐₓ).

9. Dispositif selon la revendication 8, **caractérisé en ce que** la troisième valeur de consigne (Clₘₐₓ) est légèrement inférieure à la plus haute (I_{max max}) des deux premières valeurs de consigne (I_{max max}, I_{max min}).

10. Dispositif selon l'une des revendications précédentes, **caractérisé en ce que** la consigne modifiée (C) est obtenue en outre en réduisant la consigne donnée par l'utilisateur (CU) lorsque la valeur du courant de commutation (I_{commut}) dépasse une valeur de consigne haute (C I_{commut max}) relative au courant de commutation (I_{commut}).

11. Dispositif selon la revendication 10, **caractérisé en ce que** la valeur de consigne haute (C I_{commut max}) relative au courant de commutation (I_{commut}) est déterminée pour que l'interrupteur (T_{A}, T_{B} T_{A}, T_{B}, T_{C}, T_{D} ; T_{B}) et la diode (D_{A}, D_{B} ; D_{A}, D_{B}, D_{C}, D_{D} ; D_{B}) de roue libre associée ne soient pas endommagés par un courant de commutation trop fort.

12. Dispositif selon l'une des revendications précédentes, **caractérisé en ce que** la consigne modifiée (C) est obtenue en outre en augmentant la consigne donnée par l'utilisateur (CU) lorsque la valeur du courant de commutation (I_{commut}), devient inférieure à une valeur de consigne basse (C I_{commut min}) relative au courant de commutation (I_{commut}).

13. Dispositif selon la revendication 12, **caractérisé en ce que** le générateur (8) comporte une capacité d'aide à la commutation (C_{A}, C_{B} ; C_{A}, C_{B}, C_{C}, C_{D} ; C_{B}) montée en parallèle de l'interrupteur (T_{A}, T_{B} ; T_{A}, T_{B}, T_{C}, T_{D}; T_{B}), et **en ce que** la valeur de consigne basse (Cl_{commut min}) relative au courant de commutation (I_{commut}) est déterminée pour que la capacité d'aide à la commutation (C_{A}, C_{B}; C_{A}, C_{B}, C_{C}, C_{D}; C_{B}) puisse se charger suffisamment.

14. Dispositif selon l'une des revendications précédentes, **caractérisé en ce que** les premiers moyens (10) comportent un transformateur de courant (11), **en ce que** des composants électroniques (16, 17, 18) font circuler un courant dans une résistance (19) lorsque l'interrupteur (T_{B}) ou la diode de roue libre (D_{B}) associée à cet interrupteur (T_{B}) sont conducteurs et **en ce que** la tension aux bornes de la résistance (19) forme un signal représentatif du courant instantané (i) circulant dans l'interrupteur (T_{B}) et dans la diode de roue libre (D_{B}) associée à cet interrupteur (T_{B}).

15. Dispositif selon l'une des revendications précédentes, **caractérisé en ce que** les seconds moyens (20) comportent une première diode (21) chargeant positivement une première capacité (22), la tension aux bornes de la première capacité (22) formant un signal (Iₘₐₓ) représentatif du courant maximum circulant dans l'interrupteur (T_{B}) et dans la diode de roue libre (D_{B}) associée à cet interrupteur (T_{B}).

16. Dispositif selon l'une des revendications précédentes, **caractérisé en ce que** les troisièmes moyens (30) comportent une seconde diode (31) chargeant négativement une seconde capacité (32), la tension aux bornes de la seconde capacité (32) formant un signal représentatif du courant de commutation (I_{commut})

17. Dispositif selon l'une quelconque des revendications 3 à 16, **caractérisé en ce que** les quatrièmes moyens (40) comportent un intégrateur (41, 42).

18. Dispositif selon l'une des revendications précédentes, **caractérisé en ce qu'**il comporte plusieurs générateurs (8) fonctionnant alternativement et **en ce que** les premiers moyens (10) sont communs aux différents générateurs (8).

## Claims

1. Power supply device with inverter intended to supply a resonant circuit (2, 5), comprising a generator (8), comprising at least one switch (T_{A}, T_{B}; T_{A}, T_{B}, T_{C}, T_{D}; T_{B}) connected in series with the resonant circuit (2, 5) and a freewheeling diode (D_{A}, D_{B}; D_{A}, D_{B}, D_{C}, D_{D}; D_{B}) connected in parallel with the switch (T_{A}, T_{B}; T_{A}, T_{B}, T_{C}, T_{D}; T_{B}) , the switch (T_{A}, T_{B}; T_{A}, T_{B}, T_{C}, T_{D}; T_{B}) being controlled by a periodic signal with a frequency referred to as the working frequency, the device being **characterised in that** it also comprises:
- first means (10) supplying a measurement of the instantaneous current (i) flowing in the resonant circuit (2, 5),
- second means (20) for deriving, from the instantaneous current (i), the maximum current (Iₘₐₓ),
- third means (30) for deriving, from the instantaneous current (i), the so-called switching current, the current for which the switch (T_{B}) or the freewheeling diode (D_{B}) associated therewith become a conductive (I_{commut}),
- first means (55) of controlling the switch (T_{A}, T_{B}; T_{A}, T_{B}, T_{C}, T_{D}; T_{B}), receiving the maximum current (Iₘₐₓ), the switching current (I_{commut}) and a reference given by the user (CU), modifying the reference given by the user (CU) according to the maximum current (Iₘₐₓ) and the switching current (I_{commut}) and supplying the periodic signal according to the modified reference (C).

2. Device according to claim 1, **characterised in that** the instantaneous current (i) is measured in the switch (T_{B}) and in the freewheeling diode (D_{B}) associated with this switch (T_{B}).

3. Device according to one of the preceding claims, **characterised in that** it also comprises fourth means (40) for deriving, from the instantaneous current (i), the mean current (I_{moy}), and **in that** the first control means (55) comprise a regulation module (60) receiving the mean current (I_{moy}) and the modified reference (C), and supplying the periodic signal.

4. Device according to one of the preceding claims, **characterised in that** it also comprises second means (50) of controlling the switch (T_{A}, T_{B}; T_{A}, T_{B}, T_{C}, T_{D}; T_{B}), rapidly stopping the functioning of the generator (8) when the maximum current (Iₘₐₓ) does not lie between the first two references (I_{max max}, I_{max min}) relating to the maximum current (Iₘₐₓ).

5. Device according to claim 4, **characterised in that** the higher (I_{max max}) of the first two references (I_{max max}, I_{max min}) is determined so that the instantaneous current (i) remains lower than a value that could damage the switch (T_{A}, T_{B}; T_{A}, T_{B}, T_{C}, T_{D}; T_{B}) or the freewheeling diode (D_{A}, D_{B}; D_{A}, D_{B}, D_{C}, D_{D}; D_{B}).

6. Device according to either one of claims 4 or 5, **characterised in that** the lower (I_{max min}) of the first two references (I_{max max}, I_{max min}) is determined so that a minimum power is transmitted by the generator (8) to the resonant circuit (2, 5).

7. Device according to any one of claims 3 to 6, **characterised in that** the regulation module (60) controls the working frequency.

8. Device according to one of the preceding claims, **characterised in that** the modified reference (C) is obtained by reducing the reference given by the user (CU) when the value of the maximum current (Iₘₐₓ) exceeds a third reference value (CIₘₐₓ) relating to the maximum current (Iₘₐₓ).

9. Device according to claim 8, **characterised in that** the third reference value (CIₘₐₓ) is slightly lower than the higher (I_{max max}) of the first two reference values (I_{max max}, I_{max min}).

10. Device according to one of the preceding claims, **characterised in that** the modified reference (C) is also obtained by reducing the reference given by the user (CU) when the value of the switching current (I_{commut}) exceeds a higher reference value (CI_{commut max}) relating to the switching current (I_{commut}).

11. Device according to claim 10, **characterised in that** the higher reference value (CI_{commut max}) relating to the switching current (I_{commut}) is determined so that the switch (T_{A}, T_{B}; T_{A}, T_{B}, T_{C}, T_{D}; T_{B}) and the associated freewheeling diode (D_{A}, D_{B}; D_{A}, D_{B}, D_{C}, D_{D}; D_{B}) are not damaged by excessively high switching current.

12. Device according to one of the preceding claims, **characterised in that** the modified reference (C) is also obtained by increasing the reference given by the user (CU) when the value of the switching current (I_{commut}) becomes less than a low reference value (CI_{commut min}) relating to the switching current (I_{commut}).

13. Device according to claim 12, **characterised in that** the generator (8) comprises a switching aid capacitor (C_{A}, C_{B}; C_{A}, C_{B}, C_{C}, C_{D}; C_{B}) connected in parallel with the switch (T_{A}, T_{B}; T_{A}, T_{B}, T_{C}, T_{D}; T_{B}) , and **in that** the low reference value (CI_{commut min}) relating to the switch current (I_{commut}) is determined so that the switching aid capacitor (C_{A}, C_{B}; C_{A}, C_{B}, C_{C}, C_{D}; C_{B}) can charge up sufficiently.

14. Device according to one of the preceding claims, **characterised in that** the first means (10) comprise a current transformer (11), **in that** electronic components (16, 17, 18) cause a current to flow in a resistor (19) when the switch (T_{B}) or the freewheeling diode (D_{B}) associated with this switch (T_{B}) are conductive and **in that** the voltage at the terminals of the resistor (19) forms a signal representing the instantaneous current (i) flowing in the switch (T_{B}) and in the freewheeling diode (D_{B}) associated with this switch (T_{B}).

15. Device according to one of the preceding claims, **characterised in that** the second means (20) comprise a first diode (21) positively charging a first capacitor (22), the voltage at the terminals of the first capacitor (22) forming a signal (Iₘₐₓ) representing the maximum current flowing in the switch (T_{B}) and in the freewheeling diode (D_{B}) associated with this switch (T_{B}).

16. Device according to one of the preceding claims, **characterised in that** the third means (30) comprise a second diode (31) negatively charging a second capacitor (32), the voltage at the terminals of the second capacitor (32) forming a signal representing the switching current (I_{commut}).

17. Device according to any one of claims 3 to 16, **characterised in that** the fourth means (40) comprise an integrator (41, 42).

18. Device according to one of the preceding claims, **characterised in that** it comprises several generators (8) functioning alternately and **in that** the first means (10) are common to the various generators (8).

## Patentansprüche

1. Wechselrichter-Versorgungsvorrichtung, die dazu vorgesehen ist, eine Resonanzschaltung (2, 5) zu versorgen, die einen Generator (8) mit wenigstens einem Ein/Aus-Schalter (T_{A}, T_{B}; T_{A}, T_{B}, T_{C}, T_{D}; T_{B}), der mit der Resonanzschaltung (2, 5) in Reihe geschaltet ist, und einer Freilaufdiode (D_{A}, D_{B}; D_{A}, D_{B}, D_{C}, D_{D}; D_{B}), die zu dem Ein/Aus-Schalter (T_{A}, T_{B}; T_{A}, T_{B}, T_{C}, T_{D}; T_{B}) parallel geschaltet ist, umfasst, wobei der Ein/Aus-Schalter (T_{A}, T_{B}; T_{A}, T_{B}, T_{C}, T_{D}; T_{B}) durch ein periodisches Signal mit einer so genannten Arbeitsfrequenz gesteuert wird, wobei die Vorrichtung **dadurch gekennzeichnet ist, dass** sie außerdem umfasst:
- erste Mittel (10), die ein Maß des momentanen Stroms (i) liefern, der in der Resonanzschaltung (2, 5) fließt,
- zweite Mittel (20) zum Ableiten des Maximalstroms (Iₘₐₓ) aus dem momentanen Strom (i),
- dritte Mittel (30) zum Ableiten des sogenannten Schaltstroms (I_{commut}), für den der Ein/Aus-Schalter (T_{B}) oder die ihm zugeordnete Freilaufdiode (D_{B}) durchschalten, aus dem momentanen Strom (i),
- erste Steuermittel (55) für den Ein/Aus-Schalter (T_{A}, T_{B}; T_{A}, T_{B}, T_{C}, T_{D}; T_{B}), die den Maximalstrom (Iₘₐₓ), den Schaltstrom (I_{commut}) und einen vom Anwender (CU) gegebenen Stellwert empfangen und den vom Anwender (CU) gegebenen Stellwert in Abhängigkeit von dem Maximalstrom (Iₘₐₓ) und dem Schaltstrom (I_{commut}) modifizieren und das periodische Signal in Abhängigkeit von dem modifizierten Stellwert (C) liefern.

2. Vorrichtung nach Anspruch 1, **dadurch gekennzeichnet, dass** der momentane Strom (i) in dem Ein/Aus-Schalter (T_{B}) und in der diesem Ein/Aus-Schalter (T_{B}) zugeordneten Freilaufdiode (D_{B}) gemessen wird.

3. Vorrichtung nach einem der vorhergehenden Ansprüche, **dadurch gekennzeichnet, dass** sie außerdem vierte Mittel (40) umfasst, um aus dem momentanen Strom (i) den mittleren Strom (I_{moy}) abzuleiten, und dass die ersten Steuermittel (55) ein Regulierungsmodul (60) umfassen, das den mittleren Strom (I_{moy}) und den modifizierten Stellwert (C) empfängt und das periodische Signal liefert.

4. Vorrichtung nach einem der vorhergehenden Ansprüche, **dadurch gekennzeichnet, dass** sie außerdem zweite Steuermittel . (50) für den Ein/Aus-Schalter (T_{A}, T_{B}; T_{A}, T_{B}, T_{C}, T_{D}; T_{B}) umfasst, die den Betrieb des Generators (8) schnell anhalten, wenn der Maximalstrom (Iₘₐₓ) nicht zwischen zwei ersten Stellwerten (I_{max max}, I_{max min}) in Bezug auf den Maximalstrom (Iₘₐₓ) liegt.

5. Vorrichtung nach Anspruch 4, **dadurch gekennzeichnet, dass** der höchste (I_{max max}) der zwei ersten Stellwerte (I_{max max}, I_{max min}) so bestimmt ist, dass der momentane Strom (i) kleiner als ein Wert bleibt, der den Ein/Aus-Schalter (T_{A}, T_{B}; T_{A}, T_{B}, T_{C}, T_{D}; T_{B}) oder die Freilaufdiode (D_{A}, D_{B}; D_{A}, D_{B}, D_{C}, D_{D}; D_{B}) beschädigen könnte.

6. Vorrichtung nach einem der Ansprüche 4 oder 5, **dadurch gekennzeichnet, dass** der niedrigste (I_{max min}) der zwei ersten Stellwerte (I_{max max}, I_{max min}) so bestimmt ist, dass eine minimale Leistung von dem Generator (8) an die Resonanzschaltung (2, 5) übertragen wird.

7. Vorrichtung nach einem der Ansprüche 3 bis 6, **dadurch gekennzeichnet, dass** das Regulierungsmodul (60) die Arbeitsfrequenz steuert.

8. Vorrichtung nach einem der vorhergehenden Ansprüche, **dadurch gekennzeichnet, dass** der modifizierte Stellwert (C) **dadurch** erhalten wird, dass der vom Anwender (CU) gegebene Stellwert verringert wird, wenn der Wert des Maximalstroms (Iₘₐₓ) einen dritten Stellwert (CIₘₐₓ) in Bezug auf den Maximalstrom (Iₘₐₓ) übersteigt.

9. Vorrichtung nach Anspruch 8, **dadurch gekennzeichnet, dass** der dritte Stellwert (CIₘₐₓ) etwas niedriger als der größte (I_{max max}) der zwei ersten Stellwerte (I_{max max}, I_{max min}) ist.

10. Vorrichtung nach einem der vorhergehenden Ansprüche, **dadurch gekennzeichnet, dass** der modifizierte Stellwert (C) außerdem **dadurch** erhalten wird, dass der vom Anwender (CU) gegebene Stellwert verringert wird, wenn der Wert des Schaltstroms (I_{commut}) einen hohen Stellwert (CI_{commut max}) in Bezug auf den Schaltstrom (I_{commut}) übersteigt.

11. Vorrichtung nach Anspruch 10, **dadurch gekennzeichnet, dass** der hohe Stellwert (CI_{commut max}) in Bezug auf den Schaltstrom (I_{commut}) so bestimmt ist, dass der Ein/Aus-Schalter (T_{A}, T_{B}; T_{A}, T_{B}, T_{C}, T_{D}; T_{B}) und die ihm zugeordnete Freilaufdiode (D_{A}, D_{B}; D_{A}, D_{B}, D_{C}, D_{D}; D_{B}) durch einen zu starken Schaltstrom nicht beschädigt werden.

12. Vorrichtung nach einem der vorhergehenden Ansprüche, **dadurch gekennzeichnet, dass** der modifizierte Stellwert (C) außerdem **dadurch** erhalten wird, dass der vom Anwender (CU) gegebene Stellwert erhöht wird, wenn der Wert des Schaltstroms (I_{commut}) niedriger als ein unterer Stellwert (CI_{commut min}) in Bezug auf den Schaltstrom (I_{commut}) wird.

13. Vorrichtung nach Anspruch 12, **dadurch gekennzeichnet, dass** der Generator (8) einen Schaltunterstützungskondensator (C_{A}, C_{B}; C_{A}, C_{B}, C_{C}, C_{D}; C_{B}) umfasst, der zu dem Ein/Aus-Schalter (T_{A}, T_{B}; T_{A}, T_{B}, T_{C}, T_{D}; T_{B}) parallel geschaltet ist, und dass der untere Stellwert (CI_{commut min}) in Bezug auf den Schaltstrom (I_{commut}) so bestimmt ist, dass der Schaltunterstützungskondensator (C_{A}, C_{B}; C_{A}, C_{B}, C_{C}, C_{D}; C_{B}) ausreichend geladen werden kann.

14. Vorrichtung nach einem der vorhergehenden Ansprüche, **dadurch gekennzeichnet, dass** die ersten Mittel (10) einen Stromtransformator (11) umfassen, dass die elektronischen Komponenten (16, 17, 18) bewirken, dass in einem ohmschen Widerstand (19) ein Strom fließt, wenn der Ein/Aus-Schalter (T_{B}) oder die diesem Ein/Aus-Schalter (T_{B}) zugeordnete Freilaufdiode (D_{B}) durchschaltet, und dass die Spannung an den Anschlüssen des ohmschen Widerstandes (19) ein Signal bildet, das den momentanen Strom (i) repräsentiert, der in dem Ein/Aus-Schalter (T_{B}) und in der diesem Ein/Aus-Schalter (T_{B}) zugeordneten Freilaufdiode (D_{B}) fließt.

15. Vorrichtung nach einem der vorhergehenden Ansprüche, **dadurch gekennzeichnet, dass** die zweiten Mittel (20) eine erste Diode (21) umfassen, die einen ersten Kondensator (22) positiv auflädt, wobei die Spannung an den Anschlüssen des ersten Kondensators (22) ein Signal (Iₘₐₓ) bildet, das den Maximalstrom repräsentiert, der im Ein/Aus-Schalter (T_{B}) und in der diesem Ein/Aus-Schalter (T_{B}) zugeordneten Freilaufdiode (D_{B}) fließt.

16. Vorrichtung nach einem der vorhergehenden Ansprüche, **dadurch gekennzeichnet, dass** die dritten Mittel (30) eine zweite Diode (31) umfassen, die einen zweiten Kondensator (32) negativ auflädt, wobei die Spannung an den Anschlüssen des zweiten Kondensators (32) ein Signal bildet, das den Schaltstrom (I_{commut}) repräsentiert.

17. Vorrichtung nach einem der Ansprüche 3 bis 16, **dadurch gekennzeichnet, dass** die vierten Mittel (40) einen Integrator (41, 42) umfassen.

18. Vorrichtung nach einem der vorhergehenden Ansprüche, **dadurch gekennzeichnet, dass** sie mehrere Generatoren (8) umfasst, die abwechselnd arbeiten, und dass die ersten Mittel (19) den verschiedenen Generatoren (8) gemeinsam sind.
